# EUROPEAN PATENT SPECIFICATION

(11) **EP 0 496 394 B1**
(45) Date of publication and mention of the grant of the patent: **18.12.1996**
(21) Application number: 92101081.5
(22) Date of filing: 23.01.1992
(51) Int. Cl.: D01D 4/00

(54) **Spinnerette blanketer**
Schutzvorrichtung für Spinndüsen
Dispositif pour la protection de filières

(30) Priority: 25.01.1991 US 646103
(43) Date of publication of application: 29.07.1992
(73) Proprietor: BASF CORPORATION, Parsippany, NJ 07054 (US)
(72) Inventor: Hodan, John A., Arden, NC 28704 (US)
(74) Representative: Prechtel, Jörg, Dipl.-Phys. Dr.

(56) References cited:
- US-A- 2 252 689
- US-A- 3 129 272
- US-A- 3 398 429
- US-A- 3 847 522
- US-A- 4 124 666

## Description

### BACKGROUND OF THE INVENTION

This invention relates generally to an apparatus for producing synthetic fibers or filaments using a spinnerette. More particularly, this invention relates to an assembly for blanketing the downstream face of a spinnerette plate with a fluid as blanketing medium, such as, for example an inert gas.

It is known that blanketing the surface of a spinnerette with certain fluids will improve a melt spinning operation by preventing the build up of fiber forming material on the spinnerette face around each extrusion orifice, thereby improving spinning performance and extending the time between spinnerette wipes. U.S. Patent No. 4,301,101 to Bachmann et al. describes the continuous application of a liquid finish, such as silicone oil, to the spinnerette face. U.S. Patent No. 3,229,330 to Ferrier et al. describes blanketing the face of the spinnerette with super-heated steam. The use of vapor of a substance which has a "depolymerizing action" on deposits formed at the edge of the nozzle orifice is suggested in U.S. Patent No. 4,124,666 to Wilhelm et al. Others have described the use of a gas which is inert to the filament (see, U.S. Patent No. 3,814,559 to Akers et al., U.S. Patent No. 3,398,429 to Dickson, U.S. Patent No. 3,761,559 to Heckrotte et al. and U.S. Patent No. 2,252,689 to Bradshaw).

The assemblies previously used to deliver these various fluids are complicated, typically with channels or ducts passing through the walls of several components (such as the metering, distribution and spinnerette plates) of the spinnerette assembly before the fluid is finally released at the face of the spinnerette. (See, for example, the above-referenced patents to Ferrier et al., Heckrotte et al. and Akers et al.).

Conventional blanketing apparatus typically provide a directed flow of fluid only from the periphery of a group of spinning orifices of the spinnerette. These apparatus cannot ensure the delivery of a uniform blanket of fluid which will not interfere with the filaments being produced.

The US-A-4,124,666 discloses two different embodiments of an assembly for blanketing the downstream base of a spinnerette with a fluid.

According to a first embodiment, the spinnerette has three rows of spinning orifices and four vapor channels recessed into the spinnerette, with each row of spinning orifices being located between two of the vapor channels. Each vapor channel is covered by a respective bar. The bars and the spinnerette define longitudinal slits on both sides of the spinning orifice rows, which allow to supply vapor as blanketing fluid through the channels and the slits to the three spinning orifice rows.

Accordingly, the vapor is collectively supplied to the orifices of one row via the adjoining slits from two opposing sides.

The second embodiment of an assembly for blanketing the downstream face of a spinnerette with a fluid disclosed in US-A-4,124,666 corresponds to the preamble part of claim 1.

The means for supplying fluid to said through-hole comprise a vapor chamber which is defined between the spinnerette and the plate, with the through-holes communicating with said vapor chamber.

It is an object of the invention to provide an apparatus for the delivery of a blanketing medium to the downstream face of the spinnerette to avoid build-up of the material being spun at the edge of the spinning orifice.

It is also an object of the invention to provide a spinnerette blanketer which is simple, inexpensive and easy to manufacture.

It is also an object of the invention to provide a spinnerette blanketer which can supply each through-hole with blanketing medium individually so that the distribution of the blanketing medium between the through-holes can be influenced.

These objectives and other advantages are achieved by the assembly having the features of claim 1, comprising a plate, also denoted as blanketer plate, located adjacent the downstream side of a spinnerette. Preferred embodiments are claimed in the dependent claims 2-10. The invention also relates to a method for blanketing the downstream face of a spinnerette with a fluid, as claimed in claim 11. The blanketer plate includes channels formed therein which define raised areas on the blanketer plate. The raised areas contact the spinnerette between and around the spinning orifices and form a seal when the plate is placed in a tight fitting relationship adjacent the exit surface of the spinnerette. The blanketer plate has through-holes formed in the channels thereof. The through-holes correspond in number and location to the number and location of spinning orifices on the spinnerette.

This assembly is effective in avoiding a build-up of the material being spun at the edges of the spinning orifices. One to its simplicity, the blanketer plate can easily and inexpensively be manufactured.

Blanketing medium is supplied to and flows through the channels to the through-holes, completely surrounding the spinning orifices on the face of the spinnerette. Therefor a flow of blanketing medium completely surrounding each spinning orifice individually is provided. The spinnerette blanketer provides a blanket of blanketing medium without interfering with the extrusion of the filaments being produced.

Since the through-holes are located in the channels of the plate, the distribution of the blanketing medium among the through-holes can be influenced, for example, by adapting the width of the channels.

Optionally, a holding frame located adjacent the downstream side of the blanketer plate may be used to hold the blanketer plate in position against the spinnerette, facilitating to secure the blanketer plate to the spinnerette.

The term "adjacent" as used herein to describe the position of two elements encompasses arrangements wherein other plates or elements may be placed between the two elements, as well as arrangements wherein the two elements are in sequential proximity.

The present invention will be described more fully hereinafter with reference to the accompanying drawings, in which illustrative embodiments of the invention are shown. This invention can, however, be embodied in many different forms and the invention should not be construed as being limited to the specific embodiments set forth herein. Rather, applicant provides these embodiments so that this disclosure will be thorough and complete and will fully convey the scope of the invention to those skilled in the art.

### BRIEF DESCRIPTION OF THE DRAWINGS

FIG. 1 is a plan view of the upstream side of the blanketer plate of the invention;
FIG. 2 is an enlarged partial cross-sectional view of the blanketer plate of the invention along section A-A in position against a spinnerette plate; and
FIG. 3 is an exploded, perspective view of an alternate embodiment of the invention.

### DETAILED DESCRIPTION OF THE PREFERRED EMBODIMENTS

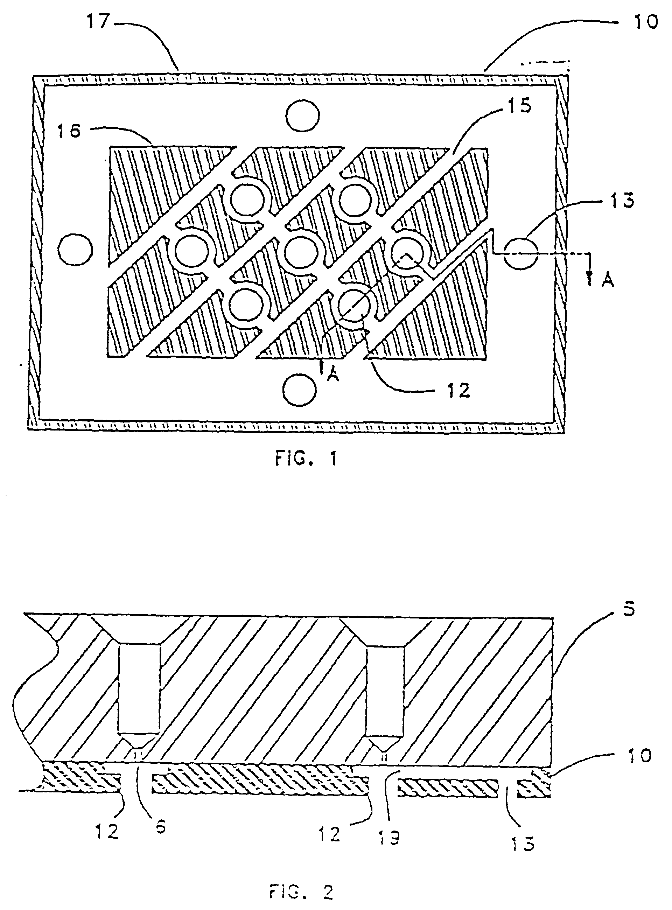

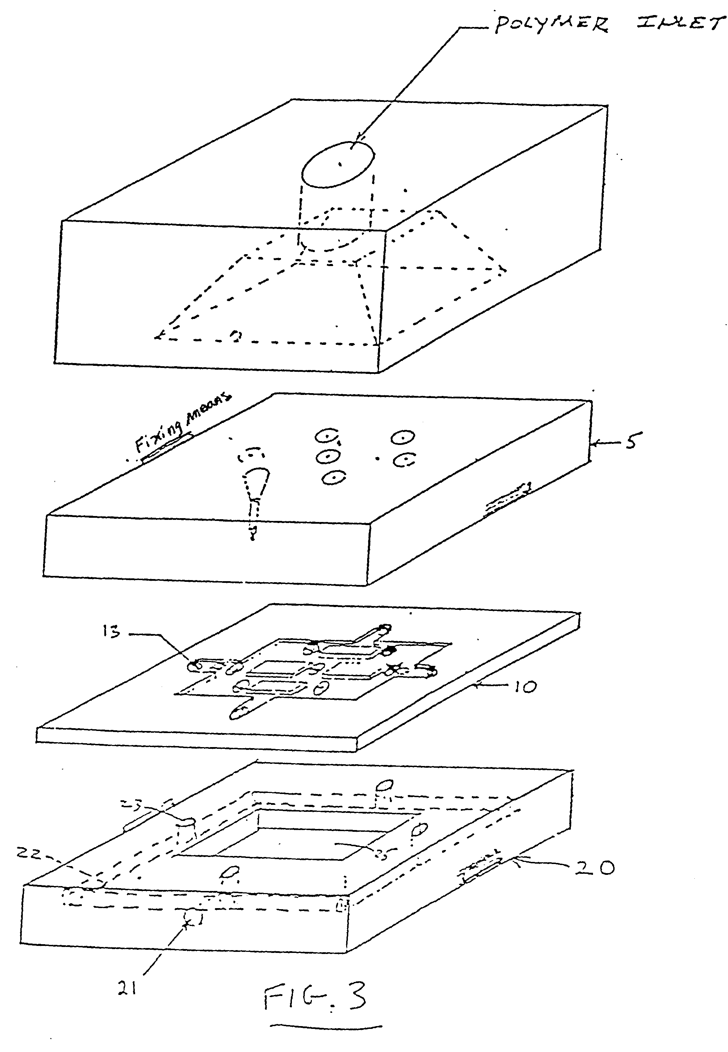

Referring now to the drawings, FIG. 1 shows the upstream side of the blanketer plate 10 of the invention. Channels 15 are formed in the blanketer plate 10 using known techniques such as, for example, etching. The channels 15 define raised areas 16 including a sealing rim 17. As best seen in FIG. 2 when the blanketer plate 10 is positioned adjacent in sequential proximity to the downstream, exit face of a spinnerette in form of a spinnerette plate 5, the channels 15 define a space 19 between the spinnerette plate 5 and the blanketer plate 10.

Blanketing medium is supplied to the upstream side of blanketer plate 10 via inlet ports 13. The blanketing medium fills the space 19 between the spinnerette plate 5 and the blanketer plate 10. The raised areas 16 and sealing rim 17 sealably contact the downstream, exit face of spinnerette plate 5 so that the path followed by the blanketing medium is controlled.

Through-holes 12 formed in the channels 15 of blanketer plate 10 correspond in number and location to the number and location of nozzle orifices 6 on the spinnerette plate 5. The through-holes 12 allow the passage of the filaments being formed through the blanketer plate 10 and also provide an exit for the blanketing medium.

The pattern of the channels 15 in the blanketer plate may vary considerably. Preferably, the channels 15 convey a substantially equal, continuous supply of blanketing medium to each through-hole 12. Typically, therefore, the pattern formed by channels 15 will be symmetrical with respect to inlet ports 13.

The blanketer plate 10 can be manufactured from any suitable material such as, for example mild steel, stainless steel, brass or aluminum. The blanketer plate, its various openings and channels may be formed by any suitable manufacturing technique, including die cutting, punching, stamping, drilling, etching, machining and/or molding or combinations thereof.

The overall dimensions of the blanketer plate can vary considerably. In general, the blanketer plate will have the same, or substantially the same planar dimensions as the spinnerette plate. While in some instances spinnerette plates may be as large as a meter or even more (a few feet) in length, more typically the planar dimensions of the spinnerette plate and hence the blanketer plate will range from about 50 to about 305 mm (from about 2.0 to about 12 inches) in length and from about 25 to about 203 mm (from about 1.0 to about 8.0 inches) in width. The thickness of the blanketer plate can also vary considerably, e. g., from about 0.4 to about 2,5 mm (from about 0.015 to about 0.1 inches) thick. The depth of the channels will obviously vary with the thickness of the plate, but typically will rage from about 0.3 to about 2.3 mm (from about 0.012 to 0.09 inches) in depth. The width of the channel may vary considerably, particularly when the blanketing medium is a gas, provided that the channel, if necessary, widens sufficiently to completely encompass the through-holes. Channels of different widths may be employed in the blanketer plate, if necessary, to more evenly distribute the blanketing medium among the through-holes.

The diameter of the through-holes should be slightly larger than the opening of the spinning orifice on the spinerette plate. Typically, spinning orifices range from about 0.2 to about 2.0 mm (from about 0.008 to about 0.08 inches) in diameter. Thus, the through-holes may typically range between 0.4 and 4.1 mm (between 0.016 and 0.16 inches) in diameter, depending on the diameter of the nozzle orifice.

The blanketing medium may be any fluid which will improve the spinning operation. The blanketing medium may also be used to add a finish or a chemical treatment to the freshly formed filaments. Suitable gaseous blanketing media include nitrogen and superheated steam. Suitable liquid blanketing media may be a silicone oil or other suitable oil. When the blanketing medium is a gas, the flow rate at which the gas is supplied to the blanketer plate should be such that when the gas exits the blanketer plate via the through-holes it does so symmetrically, in a laminar, non-turbulent flow, so that the filament being generated is not deflected in any one direction or caused to flutter by the flow of gas. Thus, suitable flow rates for the fluid will depend upon the configuration of the channels and through-holes, the number, denier and composition of the filaments being generated and the size and distribution of the orifices in the spinnerette plate.

When the blanketing medium is a liquid, the rate at which the liquid is provided to the blanketer plate should match the rate of consumption. A metering pump may be used to control the rate of liquid supply.

Alternatively, the liquid can be fed simply by means of the hydraulic pressure in the feed line, requiring only that the reservoir tank holding the liquid blanketing medium be located at a suitable height with respect to the blanketer plate.

Any suitable means may be employed to align the blanketer plate in precise registry with the spinnerette plate and to maintain the blanketer plate and spinnerette plate in a tight fitting relationship. Thus, for example, screws may be used to secure the blanketer plate to the spinnerette. As another example, the blanketer plate, spinnerette plate and other components of the spinnerette assembly may include a series of evenly spaced apertures which provide thruways accommodating terminally-threaded aligning bolts or rods which receive locking nuts to hold the assembly together.

Optionally, as shown in the alternate embodiment illustrated in FIG. 3, a support frame 20 may be used adjacent to the downstream side of the blanketer plate 10. The support frame 20 includes an opening 25 sufficient to avoid interference with the filaments being produced. The support frame 20 may facilitate securing the blanketer plate 10 to the spinnerette plate 5. The support frame 20 may also facilitate the connection of a supply line (not shown) for the blanketing medium being supplied to the blanketer plate. To that end, the support frame may include an inlet port 21, exit ports 23 and gas distribution channels 22 which communicate inlet port 21 with exit ports 23. The exit ports 23 are aligned with and communicate with the inlet ports 13 in the blanketer plate 10.

In another embodiment (not shown), the support frame includes hinge means to mount the frame adjacent the spinnerette assembly in a hinged manner so that the frame and blanketer plate can be pivoted away from the spinnerette to allow easy removal of the blanketer plate, if necessary for cleaning, repair or removal. A fixing means on the support frame such as, for example, a screw or hydraulic, located generally opposite the hinge secures the hinged support frame, and hence the blanketer plate, to the spinnerette plate and maintains a tight fitting relationship therebetween.

### Important aspects of the described invention are as follows:

A device for blanketing the surface of a spinnerette plate with a blanketing medium includes a blanketer plate adjacent the downstream face of the spinnerette plate, and supply means for providing the blanketing medium to the blanketer plate. The blanketer plate includes channels having through-holes formed therein such that the blanketing medium will surround the orifices of the spinnerette plate but will not cause the filament being generated to be deflected or to flutter.

## Claims

1. An assembly for blanketing the downstream face of a spinnerette (5) with a fluid comprising:
a spinnerette (5) having one or more spinning orifices (6);
a plate (10) adjacent to the downstream face of the spinnerette (5); said plate (10) having through-holes (12), said through-holes (12) corresponding in number and location to the number and location of the spinning orifices (6); and
means (13, 15, 21) for supplying fluid to said through-holes (12);
characterized in that
means (13, 15) for supplying fluid to said through-holes (12) comprise channels (15) in said plate (10), said channels (15) extending parallel to the downstream face of said spinnerette (5) and being defined by raised areas (16) on said plate (10) which sealably contact the spinnerette (5) when said plate (10) is positioned adjacent to the downstream face of the spinnerette (5), said through-holes (12) being located in said channels (15).

2. An assembly according to claim 1 wherein said channels (15) have different widths.

3. An assembly according to one of the preceding claims further comprising a support frame (20) adjacent to the downstream face of said plate (10).

4. An assembly according to claim 3 further comprising hinge means for pivotically mounting said frame (20) with respect to the spinnerette (5).

5. An assembly according to one of the preceding claims, wherein said means for supplying fluid to said channels (15) further comprise at least one inlet port (13) formed within said plate (10) and communicating with said channels (15).

6. An assembly according to claim 3 and claim 5, wherein said means for supplying fluid further comprise at least one inlet port (21) formed in said frame (20), at least one exit port (23) formed in the upstream face of said frame (20);
a manifold fluid passageway (22) formed in said frame (20) communicating with said inlet port (21) and said exit port (23); and
said inlet port (13) in said plate (10) communicating with said exit port (23) in said frame (20).

7. An assembly according to one of the preceding claims, wherein said channels (15) follow the lines of a grid.

8. An assembly according to one of the preceding claims, wherein said spinnerette (5) is a plate with planar upstream and downstream faces, with the downstream edges of said orifices (6) being located in the plane of said downstream face.

9. An assembly according to one of the preceding claims, wherein the through-holes (12) are located in first channels (15) extending between and connecting second channels (15) having no through-holes (12).

10. An assembly according to claim 9, wherein each through-hole (12) is located in a first channel portion delimited on both ends by a respective second channel, said first channel portion having no further through-hole (12).

11. A method for blanketing the downstream face of a spinnerette (5) with a fluid, the spinnerette (5) having one or more spinning orifices (6) for spinning fibers in a first direction, the method comprising:
installing a plate (10) adjacent to the downstream face of the spinnerette (5), said plate (10) having
channels (15) formed therein extending parallel to the downstream face of said spinnerette and being defined by raised areas (16) on said plate (10) which sealably contact the spinnerette (5) when said plate (10) is positioned adjacent to the downstream face of the spinnerette (5); and
through-holes (12) located in said channels (15), said through-holes (12) corresponding in number and location to the number and location of spinning orifices (6); and supplying fluid to said channels (15).

## Patentansprüche

1. Aufbau zum Überdecken der stromabwärtigen Seite einer Spinndüsenvorrichtung (5) mit einem Fluid, umfassend: eine Spinndüsenvorrichtung (5) mit einer oder mehreren Spinnöffnungen (6);
eine Platte (10) benachbart der stromabwärtigen Seite der Spinndüsenvorrichtung (5); wobei die Platte (10) Durchgangslöcher (12) aufweist, wobei die Durchgangslöcher (12) nach Anzahl und Ort der Anzahl und dem Ort der Spinnöffnungen (6) entsprechen; und
ein Mittel (13, 15, 21) zur Zufuhr von Fluid zu den Durchgangslöchern (12);
**dadurch gekennzeichnet,**
daß das Mittel (13, 15) zur Zufuhr von Fluid zu den Durchgangslöchern (12) Kanäle (15) in der Platte (10) umfaßt, wobei sich die Kanäle (15) parallel zu der stromabwärtigen Seite der Spinndüsenvorrichtung (5) erstrecken und durch erhabene Bereiche (16) an der Platte (10) begrenzt sind, die die Spinndüsenvorrichtung (5) dichtend berühren, wenn die Platte (10) benachbart der stromabwärtigen Seite der Spinndüsenvorrichtung (5) angeordnet ist, wobei die Durchgangslöcher (12) in den Kanälen (15) angeordnet sind.

2. Aufbau nach Anspruch 1, bei dem die Kanäle (15) verschiedene Breiten aufweisen.

3. Aufbau nach einem der vorangehenden Ansprüche ferner umfassend einen Halterahmen (20) benachbart der stromabwärtigen Seite der Platte (10).

4. Aufbau nach Anspruch 3, ferner umfassend Gelenkmittel zum schwenkbaren Anbringen des Rahmens (20) bezüglich der Spinndüsenvorrichtung (5).

5. Aufbau nach einem der vorangehenden Ansprüche, bei dem das Mittel zur Zufuhr von Fluid zu den Kanälen (15) ferner wenigstens eine Einlaßöffnung (13) umfaßt, die innerhalb der Platte (10) ausgebildet ist und mit den Kanälen (15) in Verbindung steht.

6. Aufbau nach Anspruch 3 und Anspruch 5, bei dem das Mittel zur Zufuhr von Fluid ferner umfaßt:
wenigstens eine in dem Rahmen (20) ausgebildete Einlaßöffnung (21), wenigstens eine in der stromaufwärtigen Seite des Rahmens (20) ausgebildete Auslaßöffnung (23);
einen in dem Rahmen (20) ausgebildeten Fluidverteildurchgang (22), der mit der Einlaßöffnung (21) und der Auslaßöffnung (23) in Verbindung steht; und
die Einlaßöffnung (13) in der Platte (10), die mit der Auslaßöffnung (23) in dem Rahmen (20) in Verbindung steht.

7. Aufbau nach einem der vorangehenden Ansprüche, bei dem die Kanäle (15) den Linien eines Gitters folgen.

8. Aufbau nach einem der vorangehenden Ansprüche, bei dem die Spinndüsenvorrichtung (5) eine Platte mit ebener stromaufwärtiger und ebener stromabwärtiger Fläche ist, wobei die stromabwärtigen Ränder der Öffnungen (6) in der Ebene der stromabwärtigen Fläche angeordnet sind.

9. Aufbau nach einem der vorangehenden Ansprüche, bei dem die Durchgangslöcher (12) in ersten Kanälen (15) angeordnet sind, die sich zwischen zweiten Kanälen (15), die keine Durchgangslöcher (12) aufweisen, erstrecken und diese verbinden.

10. Aufbau nach Anspruch 9, bei dem jedes Durchgangsloch (12) in einem Abschnitt eines ersten Kanals angeordnet ist, der an beiden Enden durch einen jeweiligen zweiten Kanal begrenzt ist, wobei der Abschnitt des ersten Kanals kein weiteres Durchgangsloch (12) aufweist.

11. Verfahren zum Überdecken der stromabwärtigen Seite einer Spinndüsenvorrichtung (5) mit einem Fluid, wobei die Spinndüsenvorrichtung (5) eine oder mehrere Spinnöffnungen (6) zum Spinnen von Fasern in einer ersten Richtung aufweist, wobei das Verfahren umfaßt:
Installieren einer Platte (10) benachbart der stromabwärtigen Seite der Spinndüsenvorrichtung (5), wobei die Platte (10) aufweist:
Kanäle (15), die in der Platte (10) ausgebildet sind und sich parallel zu der stromabwärtigen Seite der Spinndüsenvorrichtung erstrecken und durch erhabene Bereiche (16) an der Platte (10) begrenzt sind, die die Spinndüsenvorrichtung (5) dichtend berühren, wenn die Platte (10) benachbart der stromabwärtigen Seite der Spinndüsenvorrichtung (5) angeordnet ist; und
Durchgangslöcher (12), die in den Kanälen (15) angeordnet sind, wobei die Durchgangslöcher (12) nach Anzahl und Ort der Anzahl und dem Ort von Spinnöffnungen (6) entsprechen; und
Zufuhr von Fluid zu den Kanälen (15).

## Revendications

1. Ensemble pour couvrir la face aval d'une filière (5) avec un fluide, comprenant :
une filière (5) comportant un ou plusieurs orifices de filage (6) ;
une plaque (10) contiguë à la face aval de la filière (5) ; ladite plaque (10) comportant des trous débouchants (12), lesdits trous débouchants (12) correspondant en nombre et en emplacement au nombre et à l'emplacement des orifices de filage (6) ; et
des moyens (13, 15, 21) pour amener le fluide auxdits trous débouchants (12) ;
caractérisé en ce que
les moyens (13, 15) destinés à amener le fluide auxdits trous débouchants (12) comprennent des canaux (15) dans ladite plaque (10), lesdits canaux (15) s'étendant parallèlement à la face aval de ladite filière (5) et étant définis par des zones surélevées (16) sur ladite plaque (10), qui entrent en contact étanche avec la filière (5) lorsque ladite plaque (10) est placée contiguë à la face aval de la filière (5), lesdits trous débouchants (12) étant situés dans lesdits canaux (15).

2. Ensemble selon la revendication 1, dans lequel lesdits canaux (15) présentent des largeurs différentes.

3. Ensemble selon l'une quelconque des revendications précédentes, comprenant de plus un cadre de support (20) contigu à la face aval de ladite plaque (10).

4. Ensemble selon la revendication 3, comprenant de plus des moyens formant charnière pour monter ledit cadre (20) de manière pivotante par rapport à la filière (5).

5. Ensemble selon l'une quelconque des revendications précédentes, dans lequel lesdits moyens destinés à amener le fluide auxdits canaux (15) comprennent, de plus, au moins un orifice d'entrée (13) formé dans ladite plaque (10) et communiquant avec lesdits canaux (15).

6. Ensemble selon les revendications 3 et 5, dans lequel lesdits moyens destinés à amener le fluide comprennent, de plus, au moins un orifice d'entrée (21) formé dans ledit cadre (20), au moins un orifice de sortie (23) formé dans la face amont dudit cadre (20) ;
un passage distributeur de fluide (22) formé dans ledit cadre (20) communiquant avec ledit orifice d'entrée (21) et ledit orifice de sortie (23) ; et
ledit orifice d'entrée (13) dans ladite plaque (10) communiquant avec ledit orifice de sortie (23) dans ledit cadre (20).

7. Ensemble selon l'une quelconque des revendications précédentes, dans lequel lesdits canaux (15) suivent les lignes d'une grille.

8. Ensemble selon l'une quelconque des revendications précédentes, dans lequel ladite filière (5) est une plaque avec des faces amont et aval planes, les bords aval desdits orifices (6) étant placés dans le plan de ladite face aval.

9. Ensemble selon l'une quelconque des revendications précédentes, dans lequel les trous débouchants (12) sont situés dans des premiers canaux (15) s'étendant entre des seconds canaux (15) ne comportant pas de trous débouchants (12), et reliant ceux-ci.

10. Ensemble selon la revendication 9, dans lequel chaque trou débouchant (12) est situé dans une première partie de canal délimitée aux deux extrémités par un second canal respectif, ladite première partie de canal ne comportant aucun trou débouchant (12) supplémentaire.

11. Procédé pour couvrir la face aval d'une filière (5) avec un fluide, la filière (5) comportant un ou plusieurs orifices de filage (6) pour filer des fibres dans une première direction, le procédé comprenant :
l'installation d'une plaque (10) contiguë à la face aval de la filière (5), ladite plaque (10) comportant
des canaux (15), formés à l'intérieur de celle-ci, s'étendant parallèlement à la face aval de ladite filière, et définis par des zones surélevées (16) sur ladite plaque (10) qui entrent en contact étanche avec la filière (5) lorsque ladite plaque (10) est placée contiguë à la face aval de la filière (5) ; et
des trous débouchants (12) situés dans lesdits canaux (15), lesdits trous débouchants (12) correspondant en nombre et en emplacement au nombre et à l'emplacement des orifices de filage (6) ; et
l'amenée de fluide auxdits canaux (15).
